# FASCICULE DE BREVET EUROPEEN

(11) **EP 3 569 910 B1**
(45) Date de publication et mention de la délivrance du brevet: **03.03.2021**
(21) Numéro de dépôt: 19174703.9
(22) Date de dépôt: 15.05.2019
(51) Int. Cl.: F16L 37/088, F01M 13/00, F01M 11/10

(54) **DISPOSITIF DE RACCORDEMENT FLUIDIQUE POUR UN VÉHICULE AUTOMOBILE**
FLÜSSIGKEITSANSCHLUSSVORRICHTUNG FÜR EIN KRAFTFAHRZEUG
FLUID CONNECTION DEVICE FOR A MOTOR VEHICLE

(30) Priorité: 17.05.2018 FR 1854144
(43) Date de publication de la demande: 20.11.2019
(73) Titulaire: HUTCHINSON, 75008 Paris (FR)
(72) Inventeur: VEGA, Jean-Gabriel, 45700 Pannes (FR); BENARD, Thierry, 45430 Checy (FR)
(74) Mandataire: Gevers & Orès

(56) Documents cités:
- CN-A- 107 740 893
- DE-A1-102014 102 596
- DE-A1-102016 212 118
- US-A1- 2002 058 436
- US-A1- 2016 169 069

## Description

### DOMAINE TECHNIQUE

La présente invention concerne notamment un dispositif de raccordement fluidique, en particulier pour un véhicule automobile, ce dispositif pouvant être utilisé pour une application telle que le raccordement d'un embout d'admission d'air à un tuyau de fuite des gaz d'un moteur thermique à combustion interne

### ETAT DE L'ART

Un tuyau de fuite des gaz d'un moteur thermique à combustion interne, pour le passage des gaz de la chambre de combustion au carter du moteur, est largement connu sous l'appellation anglaise « blow-by ». D'une manière générale, les connectiques rapides des véhicules automobiles ont pour fonction de connecter les tuyaux de transfert de fluide aux organes du moteur. En particulier, des dispositifs de raccordement et réchauffage de fluide sont utilisés dans des systèmes de dépollution où l'on réinjecte dans le tuyau d'admission d'air les résidus gazeux de la combustion du moteur qui s'accumulent dans le carter moteur et qui contiennent notamment de l'eau. Par grand froid, cette eau peut givrer et entraîner l'obstruction du tuyau, ce qui peut provoquer en cas d'obstruction totale une augmentation de la pression dans le carter moteur conduisant à une évacuation de l'huile de lubrification contenue dans le carter par les prises de jauge de mesure. Il peut en résulter des dommages importants pour le moteur.

Dans la technique actuelle, un tel dispositif de raccordement comprend des moyens de chauffage du fluide à base de composants à coefficient de température positif ou « CTP » (ou « PTC », acronyme de l'anglais *Positive Temperature Coefficient*). Le fluide à réchauffer circule dans un tube thermiquement conducteur, typiquement en aluminium, qui est chauffé par les composants CTP. En effet, un composant CTP est relativement petit (diamètre d'environ 8 mm), ce qui conduit à utiliser un tube conducteur pour augmenter artificiellement la surface d'échange entre le fluide et les moyens de chauffage. Il existe plusieurs façons de relier thermiquement un composant CTP au tube, en général par une soudure ou bien une pression du composant sur ce tube

US 2016/169069 A1 divulgue un dispositif de raccordement fluidique avec des moyens électriques de détection du raccordement.

Le document FR-A1-2 943 718 décrit un dispositif de raccordement de fluide à composants CTP.

Les systèmes de dépollution des véhicules automobiles font l'objet d'une réglementation stricte (norme OBD, acronyme de *On Board Diagnostic*) qui a été mise en place au départ par la CARB (*Californian Air Resources Board*) pour contrôler les émissions polluantes des véhicules. L'arrivée des calculateurs électroniques de gestion du moteur et des capteurs associés a permis aux véhicules de diminuer leurs rejets polluants. L'OBD, en tant que tel, stipule que le véhicule doit, sur toute sa durée de vie, surveiller en permanence le bon fonctionnement du moteur en terme de pollution. Elle précise que les défaillances sur les émissions doivent être signalées par un voyant au tableau de bord et que des codes correspondants aux défaillances détectées doivent être enregistrés par le véhicule. Dans ce contexte, il est important de s'assurer du bon raccordement du dispositif de raccordement fluidique. Lors d'une opération de maintenance d'un moteur nécessitant le démontage du dispositif, il est possible que le dispositif ne soit pas correctement raccordé par un opérateur et ce défaut de raccordement doit pouvoir être identifié et corrigé.

La présente invention propose un perfectionnement à la technologie qui permet de répondre aux besoins de la réglementation en vigueur.

### EXPOSE DE L'INVENTION

L'invention concerne un dispositif de raccordement fluidique, en particulier pour un véhicule automobile, comportant :
- un embout femelle comportant un passage interne de circulation de fluide, et configuré pour recevoir un embout mâle,
- des moyens d'encliquetage élastique portés par ledit embout femelle et configurés pour coopérer avec ledit embout mâle lorsque ce dernier est engagé dans ledit embout femelle,
- des moyens de détection de l'encliquetage élastique dudit embout mâle dans ledit embout femelle, et
- une fiche électrique de raccordement électrique du dispositif à une source d'énergie électrique,
caractérisé en ce que lesdits moyens de détection comportent un dôme flexible et électriquement conducteur qui est logé dans ledit embout femelle et qui est élastiquement déformable depuis une position libre sans contrainte dans laquelle il a une forme générale bombée, jusqu'à une position contrainte par appui dudit embout mâle sur un sommet du dôme qui a alors une forme générale aplatie et assure une connexion électrique entre deux bornes reliées à ladite fiche électrique.

Dans la technique actuelle, un embout mâle, par exemple d'admission d'air, comprend une nervure annulaire externe destinée à coopérer par encliquetage élastique avec un embout femelle d'un dispositif de raccordement. L'invention propose de détecter cet encliquetage sans modifier l'embout mâle, ce qui est économique et donc avantageux. Pour cela, l'invention propose que les moyens de détection coopèrent directement avec l'embout mâle et de préférence avec la surface cylindrique de l'embout mâle sur laquelle la nervure est en saillie. Ceci est rendu possible grâce aux moyens de détection à dôme. Ce type de dôme est connu dans une autre application très différente, qui est un clavier d'ordinateur. Un dôme flexible et électroconducteur est situé sous chaque touche du clavier et apte à être déformé depuis une position libre jusqu'à une position déformé, par appui sur une touche, dans laquelle le dôme assure une connexion électrique. Un dôme est ici utilisé dans un dispositif de raccordement fluidique et a l'avantage d'être simple à réaliser, peu encombrant, et moins sensible aux chaines de cotes. Il permet d'optimiser la détection du bon raccordement de l'embout mâle dans l'embout femelle, de manière fiable et économique.

Le dispositif selon l'invention a ainsi une double fonction de raccordement, respectivement fluidique et électrique. Le dôme a de préférence une fonction d'interrupteur électrique simple effet normalement ouvert.

Le dispositif peut avoir pour avantage de permettre un diagnostic fiable et permanent par un calculateur d'un véhicule automobile. Au contraire, un capteur de pression qui équiperait ce type de dispositif ne permettrait pas un diagnostic à tout moment. C'est notamment le cas lorsqu'une surpression a lieu dans le bas moteur du véhicule. La surpression n'est pas une fuite et le calculateur sera perturbé et ne parviendra pas à détecter cette surpression.

Le dispositif selon l'invention peut comprendre une ou plusieurs des caractéristiques suivantes, prises isolément les unes des autres ou en combinaison les unes avec les autres :
- le dôme comprend une plaquette métallique comportant ledit sommet sensiblement en son milieu ainsi que des pattes d'appui à sa périphérie,
- les pattes sont au moins au nombre de deux, trois ou quatre,
- le dôme comprend une membrane souple d'étanchéité, qui recouvre ladite plaquette
- lesdites bornes sont reliées ensemble par au moins un composant électrique ayant une première valeur d'impédance L1 prédéterminée,
- une première desdites bornes est située sensiblement sous et au droit dudit sommet, et une seconde desdites bornes est au contact permanent d'une périphérie du dôme,
- ladite première borne est reliée à au moins un composant électrique ayant une seconde valeur d'impédance L2 prédéterminée,
- ledit embout femelle comprend une chambre interne dans laquelle est logé un support dudit dôme, ce support intégrant des pistes électriques reliées lesdites bornes et reliées à ladite fiche électrique,
- ledit support a une forme générale cylindrique, ledit dôme étant situé sur une extrémité circulaire de ce support,
- lesdits composants sont portés par ledit support et par exemple situés dans un évidement latéral de ce support,
- ledit embout femelle comprend une queue de raccordement fluidique et un corps monté à une extrémité de ladite queue, ladite chambre étant formée dans ledit corps et étant fermée par un couvercle rapporté et fixé sur ce corps,
-- ladite queue a une forme droite ou coudée,
- ledit dôme est configuré pour se déformer élastiquement dans une direction sensiblement perpendiculaire à une direction d'insertion dudit embout mâle dans l'embout femelle,
- au moins un joint annulaire d'étanchéité est monté dans ledit embout femelle et est situé en amont dudit dôme par rapport à la direction d'insertion dudit embout mâle dans l'embout femelle,
- au moins un joint annulaire d'étanchéité est monté dans ledit embout femelle et est situé en aval dudit dôme par rapport à la direction d'insertion dudit embout mâle dans l'embout femelle,
- le dispositif comprend des moyens de chauffage du fluide qui sont logés dans ledit embout femelle et reliés à ladite fiche électrique,
- le dispositif comprend ledit embout mâle, et
- ledit embout mâle comprend une extrémité tubulaire comportant une surface cylindrique externe et une nervure annulaire en saillie sur cette surface, ladite nervure étant configurée pour coopérer avec lesdits moyens d'encliquetage dudit embout femelle, et ladite surface cylindrique étant destinée à coopérer avec ledit dôme, en particulier par glissement et appui.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un dispositif de raccordement fluidique selon un mode de réalisation de l'invention,
- la figure 2 est une vue schématique en perspective du dispositif de raccordement fluidique de la figure 1 associé à un embout mâle,
- la figure 3 est une vue schématique éclatée du dispositif de la figure 2,
- la figure 4 est une vue à plus grande échelle d'une partie de la figure 3,
- la figure 5 est une vue schématique en perspective de pistes électriques du dispositif des figures 1 et 2,
- la figure 6 est une vue schématique en perspective d'un support intégrant les pistes de la figure 5,
- les figures 7a à 7d sont des schémas simplifiés illustrant un circuit électrique d'un dispositif selon l'invention,
- la figure 8 est une vue schématique partielle en coupe axiale du dispositif de la figure 2,
- la figure 9 est une vue schématique partielle en coupe axiale d'une variante de réalisation du dispositif de raccordement,
- la figure 10 est une vue schématique en perspective d'un dôme du dispositif selon l'invention, et
- les figures 11a et 11b sont des vues schématiques en coupe d'un dôme, respectivement à l'état libre sans contrainte et à l'état déformé élastiquement.

### DESCRIPTION DETAILLEE

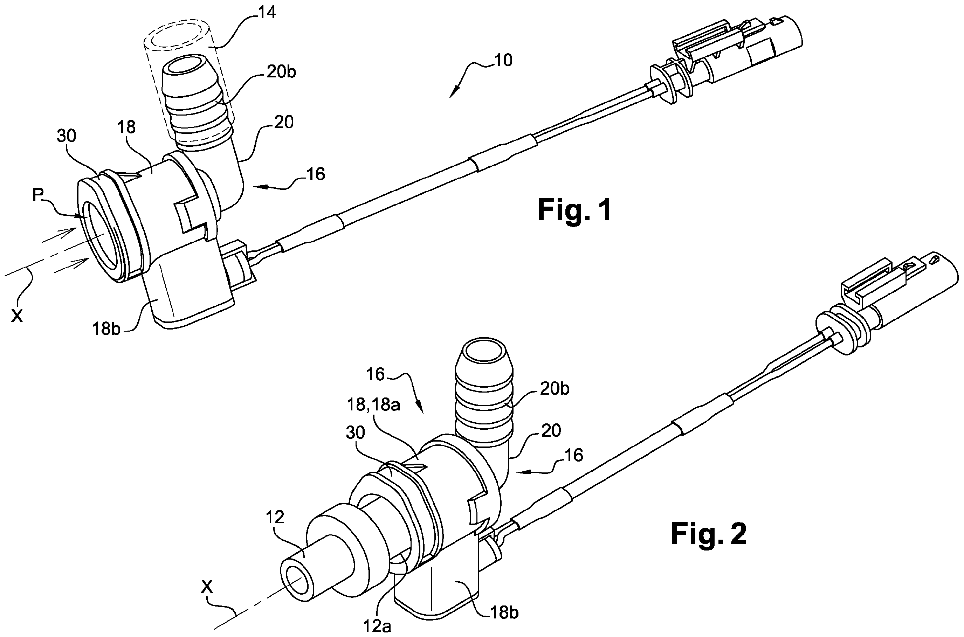

Les figures 1 à 8 illustrent un mode de réalisation d'un dispositif 10 selon l'invention de raccordement fluidique, par exemple entre un embout 12 d'admission d'air et un tuyau 14 de fuite des gaz d'un moteur thermique à combustion interne.

L'embout 12 est absent de la figure 1 et représenté aux figures 2, 3 et 8. Le tuyau 14 est schématiquement représenté par des traits pointillés à la figure 1.

Le dispositif 10 comporte un embout femelle 16 qui définit un passage interne P de circulation d'un fluide, de préférence dans le sens des flèches de la figure 1. Dans l'exemple représenté, l'embout femelle 16 comprend essentiellement deux parties, à savoir un corps 18 et une queue de raccordement 20.

Le corps 18 est par exemple réalisé en plastique. Il peut être obtenu par injection moulage. Le corps 18 comprend deux portions 18a, 18b, dont une portion 18a sensiblement cylindrique dont l'axe de révolution est noté X et correspond à l'axe d'entrée du fluide dans le corps. Le corps 18 comprend également une portion 18b qui s'étend en direction radiale par rapport à l'axe X, sur la portion 18a. Cette portion 18b forme une protubérance creuse et comprend une chambre interne L de réception de moyens 22 de détection du raccordement de l'embout 12, qui est un embout mâle, dans l'embout femelle 16.

L'embout mâle 12 a une forme générale cylindrique et comprend une surface cylindrique externe 12a sur laquelle est située en saillie au moins une nervure annulaire externe 12b.

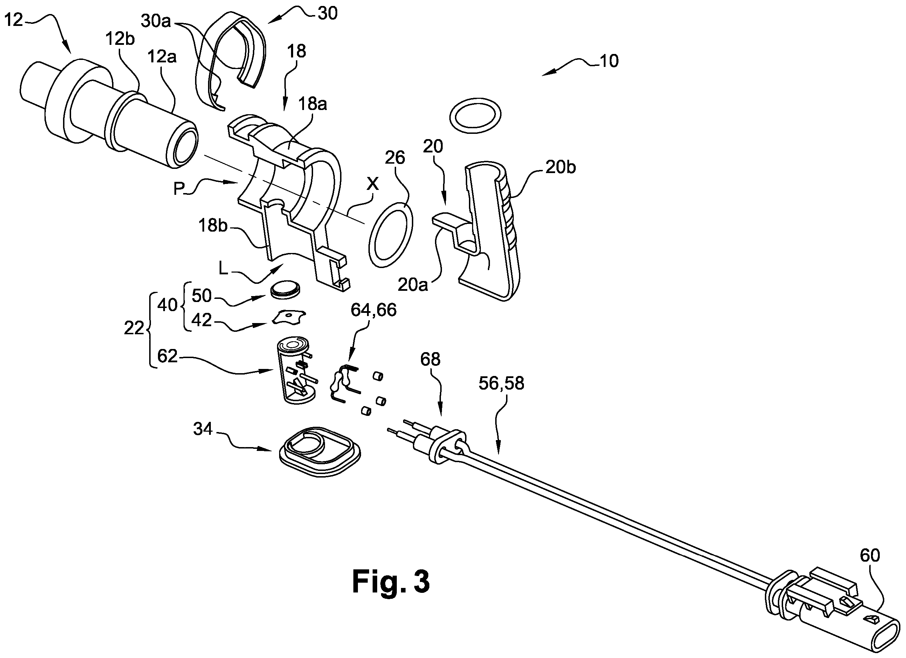

La portion 18a du corps 18 est entourée par une bague 30 d'encliquetage élastique, qui est ici amovible. Cette bague 30 est du type fendu et est élastiquement déformable de façon à augmenter son diamètre interne. La bague 30 comprend des dents 30a orientées radialement vers l'intérieur (par rapport à l'axe X) et aptes à coopérer par encliquetage élastique avec la nervure 12b de l'embout. Les dents 30a sont ici au nombre de deux et diamétralement opposées (figure 3).

La queue de raccordement 20 a une forme quelconque et est coudée dans l'exemple représenté. En variante, elle pourrait être droite. Elle peut être réalisée en matériau plastique. La queue 20 a une forme générale tubulaire et comprend une extrémité 20a montée dans une extrémité du passage interne P du corps 18, et en particulier de la portion 18a, et une extrémité 20b opposée qui a en section une forme en sapin ou analogue en vue de retenir le tuyau 14 destiné à être monté sur cette extrémité 20b.

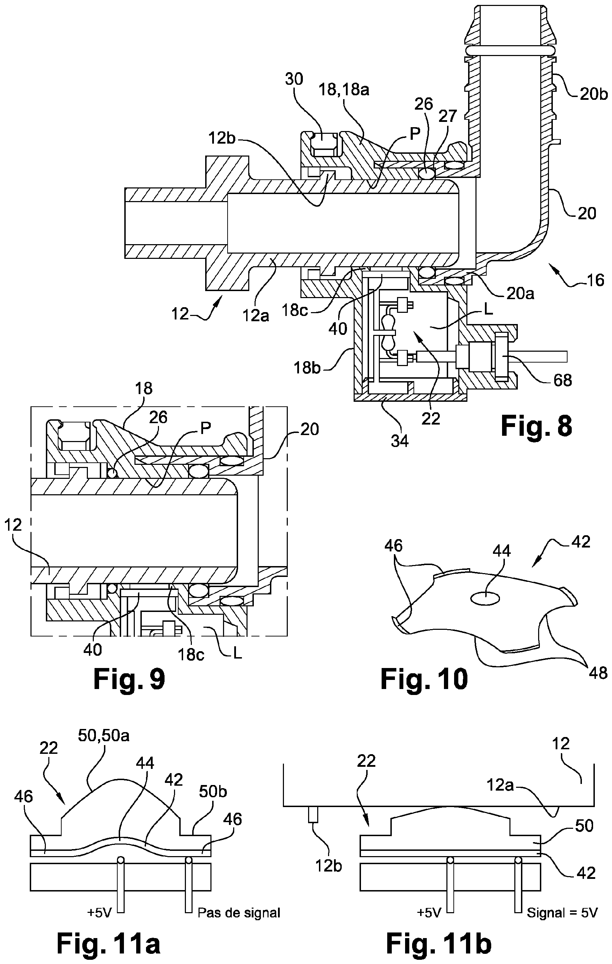

Au moins un joint torique 26 d'étanchéité est monté dans le passage interne P de l'embout femelle 16 et est configuré pour coopérer avec l'embout mâle 12. Dans l'exemple représenté, le joint est monté dans une gorge annulaire interne 27 définie entre le corps 18 et la queue 20 (figure 8). Le joint 26 est destiné à coopérer à étanchéité avec la partie de la surface cylindrique 12a de l'embout, qui s'étend entre la nervure 12b et l'extrémité libre de cet embout.

Dans la variante de réalisation représentée à la figure 9, le joint 26 est monté dans le corps 18 et est à distance axiale de la queue de raccordement 20.

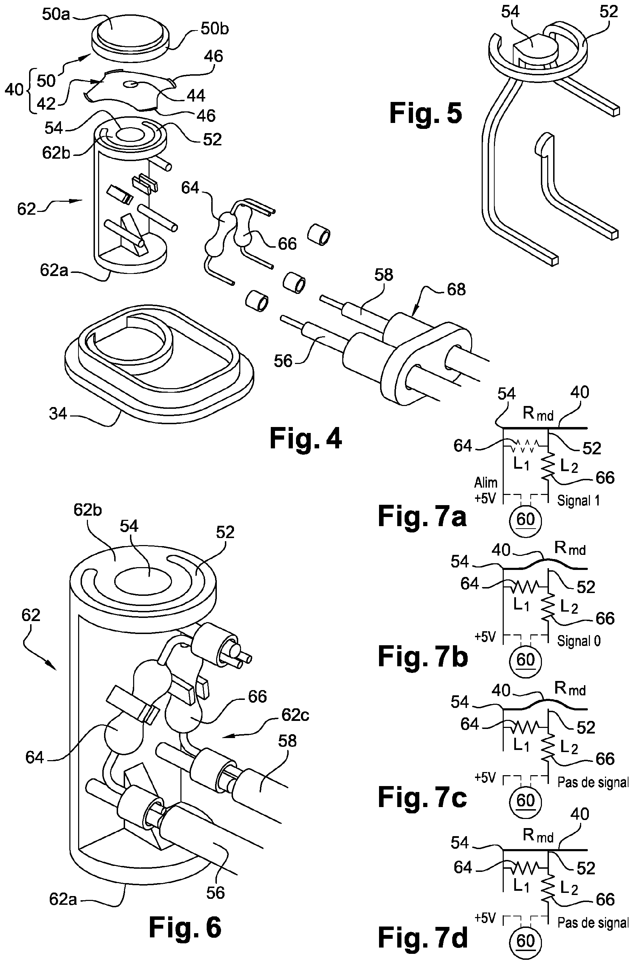

Le logement L du corps 18 débouche radialement vers l'extérieur et est ici fermé par un couvercle 34 (figure 3 et 4). Le couvercle 34 est par exemple en matériau plastique et fixé par soudure ultrason sur le corps 18.

Les moyens de détection 22 situés dans ce logement L sont mieux visibles aux figures 3 à 6.

Les moyens de détection 22 comprennent au moins un dôme 40 flexible et électriquement conducteur, tel que schématique représenté à la figure 10. Le dôme 40 est élastiquement déformable depuis une position libre sans contrainte dans laquelle il a une forme générale bombée (figure 11a), jusqu'à une position contrainte dans laquelle il a une forme générale aplatie et donc sensiblement plane (figure 11b).

Comme cela est représenté à la figure 10, le dôme 40 peut comprendre une plaquette métallique 42 comportant un sommet 44 sensiblement en son milieu ainsi que des pattes d'appui 46 à sa périphérie. La plaquette 42 est relativement fine et a par exemple une épaisseur comprise entre 0,01 et 0,2mm, et de préférence entre 0,04 et 0,1mm. Elle est par exemple réalisée en acier ressort. Elle a par exemple une longueur de 2 à 10mm et une largeur de 2 à 10mm.

Les pattes 46 ont pour but d'assurer un positionnement précis et une stabilité du dôme 40 en particulier dans sa position libre sans contrainte. Les pattes 46 peuvent être distantes les unes des autres et être reliées les unes aux autres par des bords périphériques 48 incurvés concave de la plaquette 42, comme dans l'exemple représenté. Ces bords 48 définissent des passages d'air destinés à faciliter l'évacuation de l'air situé dans l'espace sous le dôme 40, lors de sa déformation, même si le volume de cet espace est faible compte tenu des dimensions relativement faibles de la plaquette. Les bords 48 permettent en outre de diminuer la force d'écrasement du dôme, plus l'enlèvement de matière de la plaquette étant important et plus la plaquette est flexible, ce qui facilite la commutation. Les pattes 46 sont au moins au nombre de deux, trois ou quatre. Elles sont au nombre de quatre dans l'exemple représenté.

De plus, comme cela est visible à la figure 10, le sommet 44 de la plaquette 42 peut comprendre un renfoncement de façon à ce que la plaquette présente une bosse orientée vers le bas et donc située dans l'espace situé sous la plaquette 42. En variante, le sommet de la plaquette pourrait comprendre, à la place du renfoncement, une bosse, une pointe, un creux, un trou, une déformation, un arrondi, etc.

Le dôme 40 comprend en outre une membrane 50 souple d'étanchéité, qui recouvre la plaquette 42 en vue de la protéger notamment.

La membrane 50 est par exemple réalisée en caoutchouc, de préférence résistant aux hydrocarbures, et a une épaisseur comprise entre 0,5 et 5mm, et de préférence entre 0,8 et 4mm. La membrane 50 est destinée à recouvrir entièrement la plaquette 42. Elle peut avoir une forme générale circulaire dont une portion centrale 50a est bombée et recouvre la plaquette 42 et en particulier son sommet 44, et dont une portion périphérique 50b recouvre les pattes 46 et est maintenue serrée contre ces pattes par appui contre un rebord annulaire 18c du corps 18 de l'embout femelle 16.

Comme on le voit à la figure 8, le logement L débouche radialement vers l'intérieur dans le passage interne P du corps 18 par une ouverture qui est délimitée par ce rebord annulaire 18c. En position de montage du dôme 40 dans le corps 18, une partie du dôme est en saillie dans le passage P lorsque le dôme est à l'état sans contrainte (figure 11a). La partie du dôme qui est située dans le passage dans cette position peut être une partie de la membrane 50 voire de la plaquette 42. En position déformée et aplatie, le dôme 40 est contraint à l'extérieur du passage P. Ceci est rendu possible par la coopération directe de l'embout mâle 12 avec ce dôme 40.

La direction d'engagement de l'embout mâle 12 dans l'embout femelle 16 est sensiblement parallèle à l'axe X. Dans l'exemple représenté, le dôme 40 est configuré pour se déformer élastiquement dans une direction sensiblement perpendiculaire à cette direction d'insertion. Lors de l'engagement de l'embout mâle 12 dans l'embout femelle 16, la surface cylindrique 12a de l'embout 12, et en particulier la partie de cette surface s'étendant entre la nervure 12b et l'extrémité libre de l'embout, est destinée à coopérer par glissement et appui sur le dôme 40, pour le contraindre et le déformer depuis la position de la figure 11a jusqu'à la position de la figure 11b.

Dans l'exemple représenté à la figure 8, le joint d'étanchéité 26 est monté dans l'embout femelle 16 et est situé en aval du dôme 40 par rapport à la direction d'insertion de l'embout mâle 12 dans l'embout femelle 16. L'inverse est possible en variante. Dans cette variante illustrée à la figure 9, le joint 26 est monté dans l'embout femelle et est situé en amont du dôme 40 par rapport à la direction d'insertion de l'embout mâle.

Dans le cas de la figure 8, le dôme est isolé du fluide et donc moins sensible à la pression et à la nature du fluide. Dans le cas de la figure 9, le dôme 40 est apte à détecter l'embout 12 lorsque ce dernier est suffisamment engagé à étanchéité dans l'embout 16. La membrane 50 est alors exposée au fluide et doit être sélectionnée pour avoir de bonnes tenue à la pression, à la température et chimique, pour conserver sa fonction d'étanchéité en fonctionnement.

Le dôme 40, et en particulier sa plaquette 42, est réalisé(e) en matériau électroconducteur et est destiné(e) à avoir une fonction d'interrupteur électrique. En position libre sans contrainte, il ouvre un circuit électrique. En position déformée, il ferme le circuit électrique du dispositif 10. Pour cela, la périphérie du dôme 40 est en appui permanent sur une première borne électrique 52. Dans l'exemple représenté, ce contact électrique est assuré par les pattes 46 de la plaquette 42 qui prennent appui sur une borne 52 de forme générale annulaire visible aux figures 4 à 6. Le sommet 44 du dôme 40 est apte à venir en appui sur une seconde borne électrique 54 lorsque le dôme est à l'état déformé. Dans l'exemple représenté, ce contact électrique est assuré par le sommet ou la bosse inférieure de la plaquette 42 qui peut prendre appui sur une borne 54 de forme générale circulaire visible aux figures 4 à 6. La borne annulaire 52 s'étend autour de la borne circulaire 54.

Les bornes 52, 54 sont ici reliées à des pistes du circuit électrique, qui sont visibles à la figure 5. Les pistes permettent de raccorder électriquement les bornes à des conducteurs électriques 56, 58 qui sont eux-mêmes raccordés à une fiche électrique 60 de raccordement électrique du dispositif 10 à une source d'énergie électrique.

Les bornes 52, 54 et les pistes sont ici intégrées à un support 62 du dôme 40. Le support 62 a une forme générale cylindrique dont l'axe de révolution est sensiblement perpendiculaire à l'axe X. Le support 62 comprend deux extrémités longitudinales circulaires, dont une extrémité inférieure 62a peut être en appui et calée sur le couvercle 34, par coopération de formes, et dont l'extrémité supérieure 62b supporte le dôme 40.

Comme on le voit dans les dessins, les bornes 52, 54 sont situées sur cette extrémité supérieure 62b et le dôme 40 est destiné à être intercalé entre cette extrémité et le rebord annulaire 18c précité.

Le support 62 comprend un évidement latéral 62c de montage de deux composants électriques 64, 66, qui sont des résistances électriques dans l'exemple représenté. Un premier composant électrique 64 a une première valeur d'impédance L1 prédéterminée et relie les bornes électriques 52, 54 entre elles. Un second composant électrique 66 a une seconde valeur d'impédance L2 prédéterminée et est reliée à la borne annulaire 52. Plus précisément, le premier composant 64 relie entre elles des pistes électriques raccordées aux bornes 52, 54 et est en outre reliée à une extrémité d'un des conducteurs 56 reliés à la fiche 60. Le second composant relie entre elles des pistes électriques dont une est raccordée à la première borne 52 et l'autre est reliée à une extrémité de l'autre des conducteurs 58 reliés à la fiche 60.

On comprend ainsi que le support 62 intègre les bornes 52, 54 et les pistes et porte en outre les composants 64, 66, l'ensemble étant reçu dans le logement L du corps 18 qui est fermé par le couvercle 34. Les bornes 64, 66 et les pistes sont par exemple réalisées au moyen de feuilles en cupronickel poinçonnées et pliées, le support 62 étant surmoulé sur ces feuilles.

La portion 18b de l'embout femelle 16 comprend une paroi traversée par les conducteurs 56, 58 et qui peut comprendre dans cette zone un organe 68 assurant une étanchéité entre les conducteurs et cette paroi.

Les figures 7a à 7d montrent de manière simplifiée le circuit électrique du dispositif 10, avec les références précitées désignant les bornes 52, 54 et les composants électriques 64, 66.

Ces figures montrent quatre états que peut adopter ce circuit.

Dans un premier état représenté à la figure 7c, la fiche 60 du dispositif 10 n'est pas raccordée à la source d'alimentation électrique et est schématiquement représentée par un circuit ouvert. Dans un second état représenté à la figure 7b, la fiche 60 du dispositif est raccordée à la source d'alimentation électrique et le dôme 40 est à l'état libre sans contrainte. Dans le troisième état (figure 7a), le dôme 40 est déformé et assure la connexion électrique entre les bornes 52, 54. Dans le quatrième état représenté à la figure 7d, la fiche 60 n'est pas raccordée et ouvre le circuit, alors que le dôme 40 est déformé.

Selon l'état du circuit, le composant 64 est ou non passant, c'est-à-dire qu'il laisse ou non passer du courant. Dans les premier et dernier états, il ne laisse pas passer de courant. Dans le second état, il laisse passer du courant mais pas ou peu dans le troisième état car le courant va passer préférentiellement par le dôme 40 de plus faible impédance.

Dans les premier et dernier états, du fait du non raccordement de la fiche 60 et donc du dispositif 10 à la source électrique, le circuit est complètement ouvert et l'intensité du courant qui circule dans ce circuit est nulle. L'impédance équivalente du circuit est infinie. Dans le second état, le composant 64 va permettre de laisser passer du courant entre les bornes 52, 54. Dans le troisième état, le courant va privilégier un passage par le dôme 40.

La référence 60 désigne un contrôleur ou calculateur associé à ce circuit et destiné à détecter la valeur de résistance ou d'impédance du circuit pour déterminer si les embouts 12, 16 sont bien raccordés l'un dans l'autre.

Le contrôleur 60 est ainsi apte à identifier dans quel état se trouve le circuit. Pour cela, il mesure la valeur d'impédance du circuit et la compare à une ou plusieurs valeurs prédéterminée(s). Lorsque la valeur d'impédance est infinie, le circuit se trouve dans le premier ou le dernier état et le dispositif n'est pas opérationnel. Lorsque la valeur d'impédance est égale à la valeur d'impédance du composant 64, qui est par exemple de 1,2KΩ, le circuit se trouve dans le second état, la fiche 60 est bien raccordée mais l'embout 12 n'est pas engagé ou correctement engagé dans le dispositif 10. Lorsque la valeur d'impédance mesurée est inférieure à la valeur d'impédance du composant 64 (et est par exemple de quelques ohms), voire est nulle, le circuit se trouve dans le troisième état, la fiche 60 est bien raccordée et l'embout male 12 est correctement engagé dans l'embout femelle 16.

Le contrôleur 60 fait par exemple partie de l'ordinateur de bord du véhicule automobile.

Bien que cela ne soit pas représenté, le dispositif 10 peut comprendre des moyens de chauffage de fluide qui sont logés dans l'embout femelle et reliés à la fiche électrique. Ces moyens de chauffage comprennent par exemple une thermistance qui est apte à chauffer un tube thermoconducteur s'étendant coaxialement à l'intérieur du passage de l'embout femelle. La thermistance peut être située dans le logement L.

L'invention permet donc de détecter la présence physique de l'embout 12 dans le corps du dispositif 10 afin de diagnostiquer la bonne connexion de cet équipement anti-pollution selon la réglementation en vigueur.

## Revendications

1. Dispositif (10) de raccordement fluidique, en particulier pour un véhicule automobile, comportant :
- un embout femelle (16) comportant un passage interne (P) de circulation de fluide, et configuré pour recevoir un embout mâle (12),
- des moyens (30) d'encliquetage élastique portés par ledit embout femelle et configurés pour coopérer avec ledit embout mâle lorsque ce dernier est engagé dans ledit embout femelle,
- des moyens (22) de détection de l'encliquetage élastique dudit embout mâle dans ledit embout femelle, et
- une fiche électrique (60) de raccordement électrique du dispositif à une source d'énergie électrique,
lesdits moyens de détection (22) comportant un dôme (40) flexible et électriquement conducteur qui est logé dans ledit embout femelle (16) et qui est élastiquement déformable depuis une position libre sans contrainte dans laquelle il a une forme générale bombée, jusqu'à une position contrainte par appui dudit embout mâle (12) sur un sommet (44) du dôme qui a alors une forme générale aplatie et assure une connexion électrique entre deux bornes (52, 54) reliées à ladite fiche électrique.

2. Dispositif (10) selon la revendication précédente, dans lequel le dôme (40) comprend une plaquette métallique (42) comportant ledit sommet (44) sensiblement en son milieu ainsi que des pattes d'appui (46) à sa périphérie.

3. Dispositif (10) selon la revendication précédente, dans lequel les pattes (46) sont au moins au nombre de deux, trois ou quatre.

4. Dispositif (10) selon la revendication 2 ou 3, dans lequel le dôme (40) comprend une membrane (50) souple d'étanchéité, qui recouvre ladite plaquette (42).

5. Dispositif (10) selon l'une des revendications précédentes, dans lequel lesdites bornes (52, 54) sont reliées ensemble par au moins un composant électrique (64) ayant une première valeur d'impédance L1 prédéterminée.

6. Dispositif (10) selon l'une des revendications précédentes, dans lequel une première desdites bornes (54) est située sensiblement sous et au droit dudit sommet (44), et une seconde desdites bornes (52) est au contact permanent d'une périphérie du dôme (40).

7. Dispositif (10) selon la revendication 6, en dépendance de la revendication 5, dans lequel ladite première borne (54) est reliée à au moins un composant électrique (66) ayant une seconde valeur d'impédance L2 prédéterminée.

8. Dispositif (10) selon l'une des revendications précédentes, dans lequel ledit embout femelle (16) comprend une chambre interne (L) dans laquelle est logé un support (62) dudit dôme (40), ce support intégrant des pistes électriques reliées auxdites bornes (52, 54) et reliées à ladite fiche électrique (60).

9. Dispositif (10) selon la revendication précédente, dans lequel ledit support (62) a une forme générale cylindrique, ledit dôme (40) étant situé sur une extrémité circulaire (62b) de ce support.

10. Dispositif (10) selon la revendication 8 ou 9, en dépendance de la revendication 7, dans lequel lesdits composants (64, 66) sont portés par ledit support (62) et par exemple situés dans un évidement latéral (62c) de ce support.

11. Dispositif (10) selon l'une des revendications précédentes, dans lequel ledit embout femelle (16) comprend une queue (20) de raccordement fluidique et un corps (18) monté à une extrémité de ladite queue, ladite chambre (L) étant formée dans ledit corps et étant fermée par un couvercle (34) rapporté et fixé sur ce corps.

12. Dispositif (10) selon l'une des revendications précédentes, dans lequel ledit dôme (40) est configuré pour se déformer élastiquement dans une direction sensiblement perpendiculaire à une direction d'insertion dudit embout mâle (12) dans l'embout femelle (16).

13. Dispositif (10) selon l'une des revendications précédentes, dans lequel au moins un joint annulaire (26) d'étanchéité est monté dans ledit embout femelle (16) et est situé en amont dudit dôme (40) par rapport à la direction d'insertion dudit embout mâle (12) dans l'embout femelle.

14. Dispositif (10) selon l'une des revendications 1 à 12, dans lequel au moins un joint annulaire (26) d'étanchéité est monté dans ledit embout femelle (16) et est situé en aval dudit dôme (40) par rapport à la direction d'insertion dudit embout mâle (12) dans l'embout femelle.

15. Dispositif (10) selon l'une des revendications précédentes, dans lequel il comprend des moyens de chauffage du fluide qui sont logés dans ledit embout femelle (16) et reliés à ladite fiche électrique (60).

16. Dispositif (10) selon l'une des revendications précédentes, dans lequel il comprend ledit embout mâle (12).

17. Dispositif (10) selon la revendication précédente, dans lequel ledit embout mâle (12) comprend une extrémité tubulaire comportant une surface cylindrique externe (12a) et une nervure annulaire (12b) en saillie sur cette surface, ladite nervure étant configurée pour coopérer avec lesdits moyens d'encliquetage (30) dudit embout femelle (16), et ladite surface cylindrique étant destinée à coopérer avec ledit dôme (40), en particulier par glissement et appui.

## Patentansprüche

1. Fluidanschlussvorrichtung (10), insbesondere für ein Kraftfahrzeug, umfassend:
- ein Buchsen-Endstück (16), das einen inneren Durchlass (P) zur Fluidzirkulation umfasst und zur Aufnahme eines Steck-Endstücks (12) konfiguriert ist,
- elastische Einrastmittel (30), die von dem Buchsen-Endstück getragen werden und konfiguriert sind, um mit dem Steck-Endstück zusammenzuwirken, wenn dieses Letztere in das Buchsen-Endstück eingeführt ist,
- Erkennungsmittel (22) für das elastische Einrasten des Steck-Endstücks in das Buchsen-Endstück, und
- einen elektrischen Stecker (60) zum elektrischen Anschluss der Vorrichtung an eine elektrische Energiequelle,
wobei die Erkennungsmittel (22) eine flexible und elektrisch leitfähige Kuppel (40) umfassen, die in dem Buchsen-Endstück (16) aufgenommen ist, und die aus einer freien unbeaufschlagten Position, in der sie eine im Allgemeinen gewölbte Form aufweist, bis zu einer beaufschlagten Position durch Anlegen des Steck-Endstücks (12) an einen Scheitel (44) der Kuppel elastisch verformbar ist, die somit eine allgemeine abgeflachte Form aufweist und für eine elektrische Verbindung zwischen zwei Polklemmen (52, 54) sorgt, die an den elektrischen Stecker angeschlossen sind.

2. Vorrichtung (10) nach dem vorstehenden Anspruch, wobei die Kuppel (40) eine Metallplatte (42) umfasst, die den Scheitel (44) im Wesentlichen in ihrer Mitte sowie Anlagelaschen (46) an ihrem Umfang umfasst.

3. Vorrichtung (10) nach dem vorstehenden Anspruch, wobei die Laschen (46) mindestens zwei, drei oder vier an der Zahl sind.

4. Vorrichtung (10) nach Anspruch 2 oder 3, wobei die Kuppel (40) eine flexible Dichtmembran (50) umfasst, die die Platte (42) abdeckt.

5. Vorrichtung (10) nach einem der vorstehenden Ansprüche, wobei die Polklemmen (52, 54) durch mindestens eine elektrische Komponente (64) aneinander angeschlossen sind, die einen ersten vorbestimmten Impedanz-Wert L1 aufweist.

6. Vorrichtung (10) nach einem der vorstehenden Ansprüche, wobei eine erste der Polklemmen (54) im Wesentlichen unter und gegenüber dem Scheitel (44) gelegen ist, und eine zweite der Polklemmen (52) in Dauerkontakt mit einem Umfang der Kuppel (40) ist.

7. Vorrichtung (10) nach Anspruch 6, in Abhängigkeit von Anspruch 5, wobei die erste Polklemme (54) an mindestens eine elektrische Komponente (66) angeschlossen ist, die einen zweiten vorbestimmten Impedanz-Wert L2 aufweist.

8. Vorrichtung (10) nach einem der vorstehenden Ansprüche, wobei das Buchsen-Endstück (16) eine innere Kammer (L) umfasst, in der eine Halterung (62) der Kuppel (40) aufgenommen ist, wobei diese Halterung elektrische Bahnen beinhaltet, die an die Polklemmen (52, 54) und an den elektrischen Stecker (60) angeschlossen sind.

9. Vorrichtung (10) nach dem vorstehenden Anspruch, wobei die Halterung (62) eine allgemeine zylindrische Form aufweist, wobei die Kuppel (40) an einem kreisförmigen Ende (62b) dieser Halterung gelegen ist.

10. Vorrichtung (10) nach Anspruch 8 oder 9, in Abhängigkeit von Anspruch 7, wobei die Komponenten (64, 66) durch die Halterung (62) getragen werden und beispielsweise in einer seitlichen Aussparung (62c) dieser Halterung gelegen sind.

11. Vorrichtung (10) nach einem der vorstehenden Ansprüche, wobei das Buchsen-Endstück (16) einen Fluidanschluss-Schaft (20) und einen Körper (18) umfasst, der an einem Ende des Schaftes montiert ist, wobei die Kammer (L) in dem Körper gebildet ist und durch einen Deckel (34) verschlossen ist, der an diesem Körper beigebracht und befestigt ist.

12. Vorrichtung (10) nach einem der vorstehenden Ansprüche, wobei die Kuppel (40) konfiguriert ist, um sich in einer zu einer Einführungsrichtung des Steck-Endstücks (12) in das Buchsen-Endstück (16) im Wesentlichen senkrechten Richtung elastisch zu verformen.

13. Vorrichtung (10) nach einem der vorstehenden Ansprüche, wobei mindestens eine ringförmige Dichtung (26) in dem Buchsen-Endstück (16) montiert ist und stromaufwärts der Kuppel (40) in Bezug auf die Einführungsrichtung des Steck-Endstücks (12) in das Buchsen-Endstück gelegen ist.

14. Vorrichtung (10) nach einem der Ansprüche 1 bis 12, wobei mindestens eine ringförmige Dichtung (26) in dem Buchsen-Endstück (16) montiert ist und stromabwärts der Kuppel (40) in Bezug auf die Einführungsrichtung des Steck-Endstücks (12) in das Buchsen-Endstück gelegen ist.

15. Vorrichtung (10) nach einem der vorstehenden Ansprüche, wobei sie Mittel zum Erwärmen des Fluids umfasst, die in dem Buchsen-Endstück (16) aufgenommen sind und an den elektrischen Stecker (60) angeschlossen sind.

16. Vorrichtung (10) nach einem der vorstehenden Ansprüche, wobei sie das Steck-Endstück (12) umfasst.

17. Vorrichtung (10) nach dem vorstehenden Anspruch, wobei das Steck-Endstück (12) ein röhrenförmiges Ende umfasst, das eine zylindrische äußere Oberfläche (12a) und eine ringförmige Rippe (12b) auf dieser Oberfläche hervorstehend umfasst, wobei die Rippe konfiguriert ist, um mit den Einrastmitteln (30) des Buchsen-Endstücks (16) zusammenzuwirken, wobei die zylindrische Oberfläche dazu bestimmt ist, insbesondere durch Gleiten und Anlegen mit der Kuppel (40) zusammenzuwirken.

## Claims

1. A fluid connection device (10), in particular for a motor vehicle, comprising:
- a female nozzle (16) having an internal fluid flow passage (P), and configured to receive a male nozzle (12),
- elastic snap-in means (30) carried by said female nozzle and configured to cooperate with said male nozzle when the latter is engaged in said female nozzle,
- means (22) for detecting the elastic snap-in of said male nozzle into said female nozzle, and
- an electrical plug (60) for electrically connecting the device to an electrical power source,
said detection means (22) comprising a flexible and electrically conductive dome (40) which is housed in said female nozzle (16) and which is elastically deformable from a free position without stress in which it has a generally curved shape, to a position stressed by pressing said male nozzle (12) onto a vertex (44) of the dome which then has a generally flattened shape and provides an electrical connection between two terminals (52, 54) connected to said electrical plug.

2. The device (10) according to the preceding claim, wherein the dome (40) comprises a metal plate (42) having said vertex (44) substantially in its center as well as support legs (46) at its periphery.

3. The device (10) according to the preceding claim, in which the legs (46) are at least two, three or four in number.

4. The device (10) according to claim 2 or 3, wherein the dome (40) comprises a flexible sealing membrane (50), which covers said plate (42).

5. The device (10) according to one of the preceding claims, wherein said terminals (52, 54) are connected together by at least one electrical component (64) having a first predetermined impedance value L1.

6. The device (10) according to one of the preceding claims, wherein a first of said terminals (54) is located substantially below and perpendicular to said vertex (44), and a second of said terminals (52) is in permanent contact with a periphery of the dome (40).

7. The device (10) according to claim 6, depending on claim 5, wherein said first terminal (54) is connected to at least one electrical component (66) having a second predetermined impedance value L2.

8. The device (10) according to one of the preceding claims, wherein said female nozzle (16) comprises an internal chamber (L) in which is housed a support (62) of said dome (40), this support integrating electrical tracks connected to said terminals (52, 54) and connected to said electrical plug (60).

9. The device (10) according to the preceding claim, wherein said support (62) has a generally cylindrical shape, said dome (40) being located on a circular end (62b) of said support.

10. The device (10) according to claim 8 or 9, depending on claim 7, wherein said components (64, 66) are carried by said support (62) and for example located in a lateral recess (62c) of this support.

11. The device (10) according to one of the preceding claims, wherein said female nozzle (16) comprises a fluid connection tail (20) and a body (18) mounted at one end of said tail, said chamber (L) being formed in said body and being closed by a cover (34) attached and fixed to said body.

12. The device (10) according to one of the preceding claims, wherein said dome (40) is configured to elastically deform in a direction substantially perpendicular to a direction of insertion of said male nozzle (12) into the female nozzle (16).

13. The device (10) according to one of the preceding claims, wherein at least one annular sealing joint (26) is mounted in said female nozzle (16) and is located upstream of said dome (40) with respect to the direction of insertion of said male nozzle (12) into the female nozzle.

14. The device (10) according to one of claims 1 to 12, wherein at least one annular sealing joint (26) is mounted in said female nozzle (16) and is located downstream of said dome (40) with respect to the direction of insertion of said male nozzle (12) into the female nozzle.

15. The device (10) according to one of the preceding claims, wherein it comprises fluid heating means which are housed in said female nozzle (16) and connected to said electrical plug (60).

16. The device (10) according to one of the preceding claims, wherein it comprises said male nozzle (12).

17. The device (10) according to the preceding claim, wherein said male nozzle (12) comprises a tubular end having an outer cylindrical surface (12a) and an annular rib (12b) projecting from this surface, said rib being configured to cooperate with said snap-in means (30) of said female nozzle (16), and said cylindrical surface being intended to cooperate with said dome (40), in particular by sliding and pressing.
